# EUROPEAN PATENT SPECIFICATION

(11) **EP 0 540 281 B1**
(45) Date of publication and mention of the grant of the patent: **03.07.1996**
(21) Application number: 92309802.4
(22) Date of filing: 26.10.1992
(51) Int. Cl.: B29C 67/00, B29C 35/04, G09F 9/00

(54) **Method and apparatus for fabricating bichromal balls for a twisting ball display**
Verfahren und Vorrichtung zur Herstellung von zweifarbigen Kugeln für eine Drehkugelanzeige
Procédé et appareil pour la fabrication de boules bicolores pour un écran ou l'affichage est obtenu par rotation de boules

(30) Priority: 29.10.1991 US 784294
(43) Date of publication of application: 05.05.1993
(73) Proprietor: XEROX CORPORATION, Rochester New York 14644 (US)
(72) Inventor: Sheridon, Nicholas K., Los Altos, California 94022 (US)
(74) Representative: Johnson, Reginald George

(56) References cited:
- EP-A- 0 046 535
- EP-A- 0 427 507
- AU-D- 2 166 570
- CH-A- 563 807
- FR-A- 1 296 788
- FR-A- 1 378 330
- FR-A- 2 128 749
- NL-A- 8 003 919
- US-A- 4 126 854

## Description

The present invention relates to a method and apparatus for forming bichromal balls and more particularly, but not exclusively, to the fabrication of small balls, about 5 to 200 microns in diameter, having hemispheres of contrasting colors for use in an "electric paper" display sheet.

A display sheet and display system is disclosed in European Patent Application No. 90312128.3 (Publication No. 0 427 507). Displays are also disclosed in U.S. Patents Nos. 4,126,854 and 4,143,103 and an article co-authored by me entitled "The Gyricon - A Twisting Ball Display", published in the Proceedings of the S.I.D., Vol. 18/3&4, Third and Fourth Quarters 1977.

The display device, in sheet form, as described in the above European patent application comprises a thin transparent sheet having many of the attributes of paper documents. It looks like paper, has ambient light valve behavior like paper (i.e. the brighter the ambient light, the more easily it may be seen), is flexible like paper, can be carried around like paper, can be written on like paper, can be copied like paper, and has nearly the archival memory of paper. It is also possible to form the display device as a rigid structure incorporating an array of addressing electrodes. In both embodiments, the salient features are an elastomeric host layer a few mils thick which is heavily loaded with balls tens of microns in diameter. Each bichromal ball has hemispheres of contrasting colors, such as a white half and a black half, and is contained in its own spherical cavity filled with a dielectric liquid. Upon application of an electrical field between electrodes located on opposite surfaces of the host layer, the balls will rotate depending on the polarity of the field, presenting one or the other hemisphere to an observer.

In the above-identified article, there is disclosed a method for fabricating bichromal balls. First, monochromatic glass balls are formed, heavily loaded with titanium dioxide so as to appear white. These are deposited in a monolayer upon a substrate. Then the balls are coated from one direction in a vacuum evaporation chamber with a dense layer of nonconductive black material which coats one hemisphere.

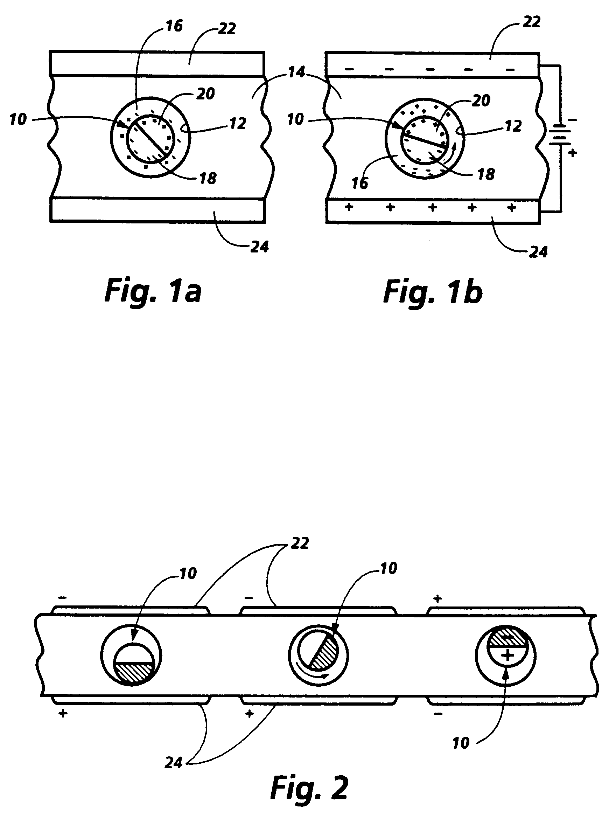

As illustrated in Figure 1a bichromal balls 10 are loaded in liquid filled cavities 12 in a host matrix 14. Both the liquid 16 surrounding the balls and the balls themselves are dielectric. Therefore, although the balls are macroscopically electrically neutral, on a microscopic scale they have an electrical double layer comprising two layers of charges of opposite sign (as shown). One charge layer is localized at the surface of the ball and the other charge layer is in the nature of a space charge extending outward from the surface of the ball into the dielectric liquid. The measurable aspect of the electrical double layer, known as the zeta potential, is the net surface and volume charge that lies within a shear surface associated with the motion of the ball through the liquid. For a given liquid, the zeta potential is a function only of the ball surface material. Thus, the material properties which give rise to differences associated with the color or reflectivity of each hemisphere 18 and 20 give rise to different characteristic zeta potentials with respect to the dielectric liquid 16 in the cavity 12. It is the difference in zeta potential between the hemispheres of the ball which causes the ball to act like a dipole in the presence of an electrical field, as illustrated in Figure 1b. The ball 10 will rotate, until its dipole moment lines up with the direction of the electrical field established between opposed electrodes 22 and 24.

In addition to the dipole charge distribution found on the bichromal ball in the presence of an electrical field there is also a monopole charge which is the net electrical charge. It is quite unlikely that the two hemispheres 18 and 20 having zeta potentials of opposite polarity will have the same magnitude. However, if that is the case, a monopole charge will not be established. As a result of the monopole charge, the ball 10 is caused to translate in the direction of the electrical field and will rest and be retained against the cavity wall, as illustrated in Figure 2. In order for the ball to rotate easily in the liquid within the cavity, due to the dipole charge, it must move from contact with the cavity wall. When at rest against the cavity wall, friction and other forces will prevent it from rotating until it has been moved away once again, due to the monopole charge. It is this feature which enables long term image retention in this display device.

It is an object of the present invention to provide a simplified method for forming and curing bichromal balls having diameters, by way of example, in the tens of microns.

The present invention may be carried out, in one form, by providing a method of forming bichromal balls, including the steps of providing a laminar flow stream of host liquid, bringing together two streams of differently colored hardenable liquids for forming a single bichromal stream, introducing the single bichromal stream substantially into the center of the stream of host liquid, transporting the bichromal stream at substantially the same velocity as the stream of host liquid, wherein the forward end of the bichromal stream becomes unstable and breaks up into droplets which form into spherical balls as they are moved by the host liquid, curing the balls so that they harden, and separating the balls from the host liquid.

A further aspect of the present invention is the provision of an apparatus for forming the bichromal balls would comprise a housing through which a host liquid is moved, means for introducing two streams of differently colored hardenable liquids into substantially the center of the host liquid as a single bichromal stream whereby, as the bichromal stream is moved by the host liquid, the forward end of the bichromal stream becomes unstable and breaks up into droplets which form into spherical balls which continue to be moved by the host liquid, means for curing the balls so that they harden, and means for separating the balls from the host liquid.

The present invention will be described further, by way of example, with reference to the accompanying drawings, in which:-
Figure 1a is schematic representation of an electrical double layer associated with each ball hemisphere within a dielectric liquid filled cavity, before the application of an electrical field,
Figure 1b is schematic representation of an electrical double layer associated with each ball hemisphere within a dielectric liquid filled cavity after the application of an electrical field causes the ball to rotate,
Figure 2 is schematic representation of rotation and translation of the bichromal ball within its cavity,
Figure 3 is a schematic view of the two differently colored streams of hardenable liquid being brought together to form a bichromal stream which breaks up into bichromal balls,
Figure 4 is a schematic view of a drift chamber for fabricating bichromal balls,
Figure 5 is a schematic sectional view of a rotating nozzle for dispersing the balls within the drift chamber,
Figure 6 is a schematic view of a simplified fabrication apparatus,
Figures 7a and 7b illustrate two preferred forms of the double nozzle structure,
Figure 8 illustrates how very small balls may be made,
Figures 9a and 9b illustrate two forms of sheet jets for increasing the ball generation output,
Figures 10a and 10b illustrate a cylindrical sheet jet generator, and Figures 11a and 11b illustrate two forms of annular channel design for preventing lateral ball drift.

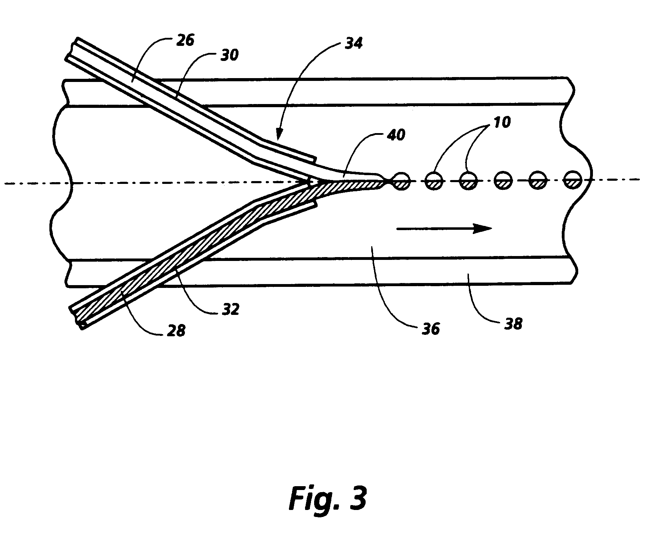

Turning to Figure 3 there is illustrated the generalized form of the fabrication apparatus for making small, pigmented (or dyed) balls 10 that have hemispheres 18 and 20 of two different colors. Two fine streams 26 and 28 of a hardenable liquid material are pumped through tubing 30 and 32 whose ends are bent to form a double nozzle 34 which brings together the two fine streams at a location close to the center of a larger stream 36 of host liquid, pumped through channel 38. The hardenable liquid material may be a thermosetting or a photosetting material, such as an epoxy resin, which in its liquid state is flowable through the fine tubing 30 and 32 and which is curable into a solid state upon the application of suitable energy. As the hardenable liquid emerges from the double nozzle 34, it quickly acquires the circular cross section of a single combined jet 40, half one color and half the other. Because this jet is highly unstable as it flows within the stream 36 of host liquid, its forward end will shortly break up into a train of droplets of uniformly sized bichromal spheres 10, whose diameters are equal to approximately twice the diameter of the stream 40. The size and uniformity of these balls may be controlled by varying the velocity of the stream 36 and by introducing a regular vibrational mechanical energy to the single combined jet 40. This may be accomplished by applying to the tubing 30 and 32 an acoustical frequency of about 1 kHz by means of a transducer, such as a quartz or other piezoelectric crystal.

### Example

In a test set-up for investigating this fabrication process, fine tubes 30 and 32 were constructed of #27 stainless steel tubing having an inner diameter of 0.2032 cms (0.008 inches) and an outer diameter of 0.4064 cms (0.016 inches), converging adjacent the center of a transparent fused quartz (for ease of observation of the process) channel 38 having an inner diameter of 0.1905 cms (0.075 inches). The host liquid flowing through the channel 38 was Fluorinert FC-70®, made by the 3M Company of St. Paul, MN. It was maintained at room temperature, had a kinematic viscosity of 13.4, a density of 1.94 grams/cc, and was pumped at a velocity of 25 cm/sec. The hardenable liquid of the fine streams 26 and 28 was a clear two-component epoxy, EPO-TEK® 301-2, made by Epoxy Technology Inc. of Billerica, MA, which included 35% (by weight) of a curing agent. An additional 12% (by weight) of an accelerating curing agent, namely, RF91® made by Resin Formulators Co. of Culver City, CA was added for enhancing its rapid curing. One of the fine streams was pigmented white with the addition of titanium dioxide to the epoxy, at about 80% of the epoxy resin by weight. The other stream was pigmented black with the addition of carbon black to the epoxy, at about 10% of the epoxy resin by weight.

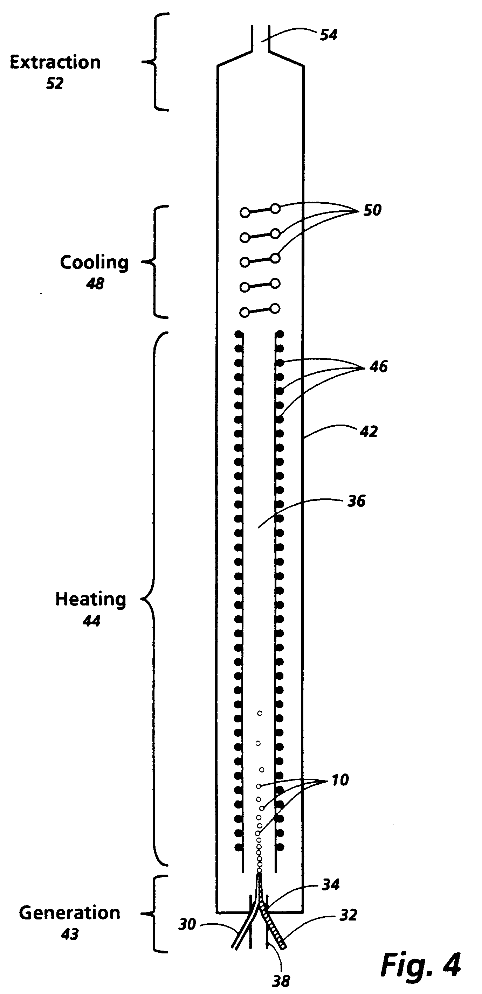

In Figure 4 there is illustrated a system for producing and collecting bichromal balls. A vertical drift chamber 42 contains the host liquid which is pumped into the lower end of the drift chamber through channel 38. At a generation region 43, double nozzle 34 introduces a fine bichromal stream 40 of hardenable liquid into the larger stream 36 of host liquid. The fine bichromal stream breaks up into bichromal balls 10 which drift vertically upwardly within the moving stream of host liquid, centrally located in the drift chamber 42. The balls first pass through a heating region 44 provided with a heating coil 46 for maintaining the host liquid at about 150°C so as to cure and harden the balls, then pass through a cooling region 48 provided with a cooling coil 50 for maintaining the host liquid at about 15°C. At the top of the drift chamber 42 there is an extraction region 52 where the balls and the entraining host liquid are removed from the chamber through a conduit 54. From there, the balls may be filtered out of the liquid and the liquid may be returned to the channel 38.

The hardenable liquid of which the balls are fabricated must have a low enough viscosity to freely pass through the fine tubing 30/32 and must cure rapidly at the cure temperature. The host liquid should have a higher specific gravity than the hardenable liquid in order to allow the balls to float therein, should be quite inert to the uncured hardenable liquid, and be able to sustain the high processing temperature.

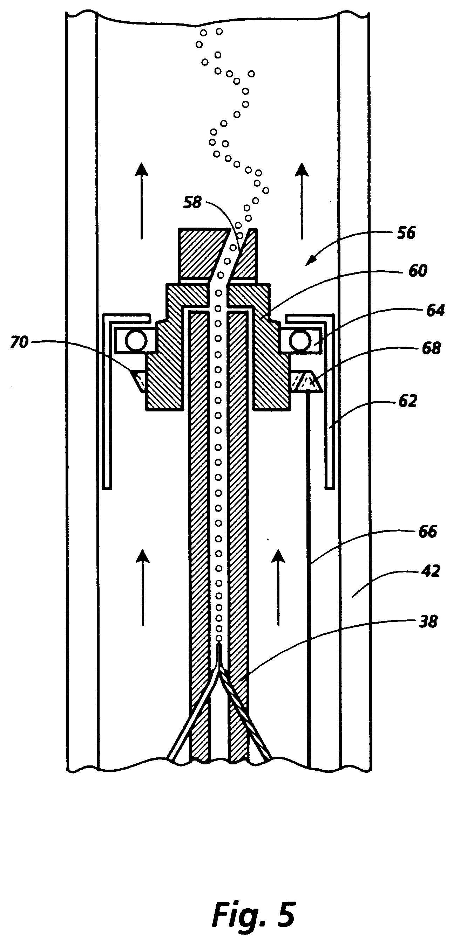

We have found that as the rapidly flowing host liquid carries the balls 10 into the bottom of the drift chamber 42, disturbances may be introduced into the column of host liquid, which may cause turbulence that will, in turn, cause the uncured balls to collide with one another and with the walls of the chamber, thus destroying their integrity. The deleterious effects of this turbulence can be minimized by introducing the hardenable balls into the drift chamber 42 in a spiral path, as shown in the embodiment of Figure 5, thereby causing the balls to be separated and lessening their tendency to collide. The balls are formed in the channel 38 having at its upper end a rotatable nozzle 56 with an exit channel 58 inclined at an angle relative to the central axis of the drift chamber 42. The rotatable nozzle 56 includes a rotatable mandrel 60, seated atop and movable relative to the channel 38, which is mounted in a support sleeve 62 within the chamber 42, via a suitable bearing 64. A drive shaft 66 with a bevel gear 68 at its end couples with a bevel gear 70 encircling the mandrel 60 for imparting motion to it.

While the drift tube embodiment is acceptable for research purpose, we have developed a more productive process. We have observed that the balls will remain entrained in the center of a channel of rapidly moving host liquid undergoing laminar flow, when balls are introduced into the center of the channel and the host liquid has a density roughly comparable to that of the balls. It is well known that liquid undergoing laminar flow in a tubular channel moves fastest in the center of the channel. It is believed that the balls will tend to stay in the fastest moving portion of the stream because as they drift radially outwardly into a slower region, that part of the ball in the slower region will experience a higher pressure than that part of the ball in the faster region and the ball will be returned to the center of the channel. By maintaining the proper liquid velocity the balls will remain in the center of the channel, even through very small radius bends.

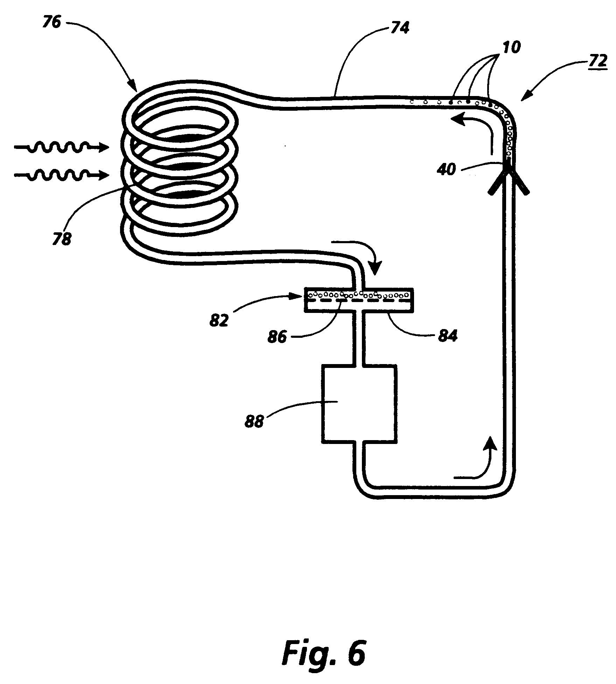

The embodiment of Figure 6 relies upon this phenomenon. It represents a greatly simplified construction as compared to the drift chamber embodiment of Figure 5, and eliminates the difficult hydrodynamic transition as the host liquid in the channel 38 merges with the host liquid in the drift chamber 42. The balls 10 are formed in a generation region 72 and transported for further processing within a single elongated tube 74, having an inner diameter of about 0.1905 cms (0.075 inches), which may be bent to follow the most desirable processing paths. As in the previously described embodiment, the bichromal balls are generated from a bichromal jet 40 formed by the intersection of two fine streams of hardenable liquid introduced to the center of the flowing host liquid. The host liquid moves the central stream of balls to a curing region 76 where the tubing 72 may be in the form of a coil 78, acted upon by a source of energy, indicated by arrows 80 directed at the tubing.

The coiled tubing 78 may be heated by, for example, being immersed in a thermal bath at about 180°C. Alternatively, the hardenable liquid may be of the class of light cured materials which may be cured by means of an ultraviolet light source. In such a case, the tubing would be made of quartz or other material that is transparent to ultraviolet light. Application of a high frequency alternating field, in the region of 13MHz, to the dielectric hardenable liquid will heat it by molecular friction. Yet another radiation source for curing the hardenable liquid could be microwave electromagnetic radiation. With the addition of carbon, iron or ferrite particles (or other material absorbent of microwave radiation) to the hardenable liquid epoxy or to the pigments dispersed therein, the curing radiation could be administered via a microwave source. It would also be possible to add a curing agent to the host liquid, such that in travelling through the coiled section sufficient curing agent would diffuse into the balls to cure them.

Subsequent to curing, the balls continue through the tube into an extraction region 82 which may comprise a chamber 84 containing a screen 86, or other filtration member, that would remove the balls from the host liquid. The liquid, depleted of balls, would then be recirculated by a pump 88 and once again pass to the generation region. This is a very effective and inexpensive continuous process. Periodically, the chamber 84 would be opened and the balls removed for being deposited into the display matrix.

In general, for consistently generating spherical balls, parabolic (laminar) flow of the host liquid should be maintained in the ball transport section of elongated tubing 74. It is believed that toroidal or turbulent flow should be avoided. To this end, we have found that the following considerations apply:
A. The tubing should be designed to be smooth and continuous. Of particular concern are the joints where two lengths of tubing are abutted. At these locations the inner diameters must be the same so that the internal walls run smoothly together. Care should be taken to minimize gaps at these joints.
B. Bends in the tubing should be smooth and not sharp.
C. If it is necessary to decrease the tube diameter, this must be accomplished by means of a smooth tapering of the tube walls over a distance large as compared to the smallest internal tube diameter.
D. Increases in tube diameter should be avoided if at all possible. However, small increases may be acceptable if the change is by means of a taper that is very long with respect to the internal diameter of the larger section.
E. Pumping must be smooth and steady.

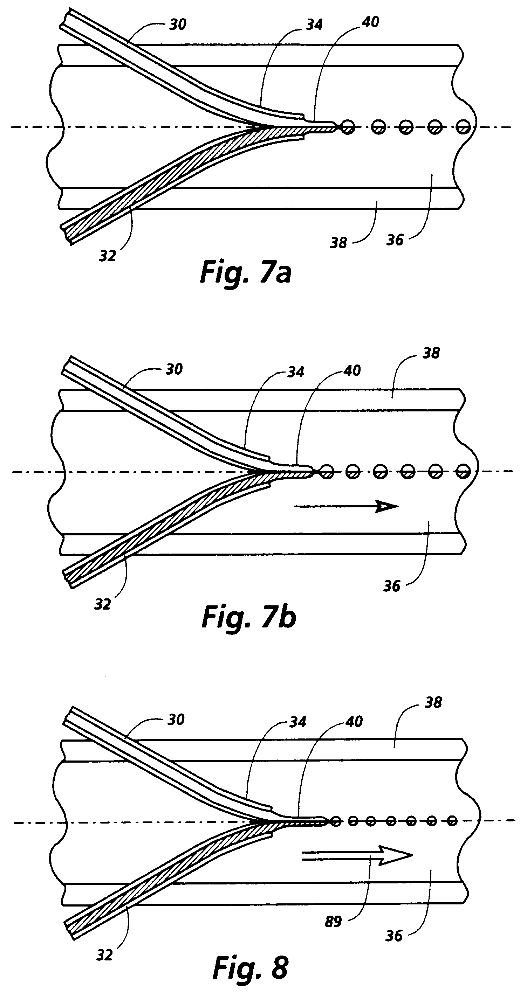

Two embodiments of the preferred form of the double nozzle structure are illustrated in Figures 7a and 7b. In each, the adjacent wall of each tube 30 and 32 is thinned and soldered together so as to allow the streams of hardenable liquid to smoothly flow together into a rod-like bichromal stream. In Figure 7a the streams combine before exiting the double nozzle 34, while in Figure 7b the streams combine immediately after exiting the double nozzle. As the single combined bichromal stream 40 enters the faster flowing host liquid it will smoothly neck down to a circular cross-section from which balls will be formed. By flowing the host liquid much faster than the hardenable liquid flowing out of the double nozzle (as indicated by the larger arrow 89 representing the flow rate), it is possible to generate balls that are a factor of ten or more smaller than would be generated by flowing the liquids at about the same velocity (note Figure 8). In this way very small balls may be made with nozzle structures large enough to be easily fabricated. The following relationship applies: ${\text{V}}_{\text{1}} {\text{R}}_{\text{1}} {}^{\text{2}} {\text{= V}}_{\text{2}} {\text{R}}_{\text{2}} {}^{\text{2}}$, where V₁R₁ are the velocity and radius of the single bichromal jet 40 emerging from the double nozzle 34, and V₂R₂ are the velocity and radius of the single bichromal jet 40 moving with the velocity V₂ of the host liquid.

We envision a ball fabrication rate of about 3.6x10⁶ balls/hour. An 8x10 inch sheet of display material would require about 240x10⁶ balls. If one mil balls are used, a single tube will generate enough balls to supply one square inch of display material in one hour. A practical manufacturing system will require a multiplicity of generating tubes.

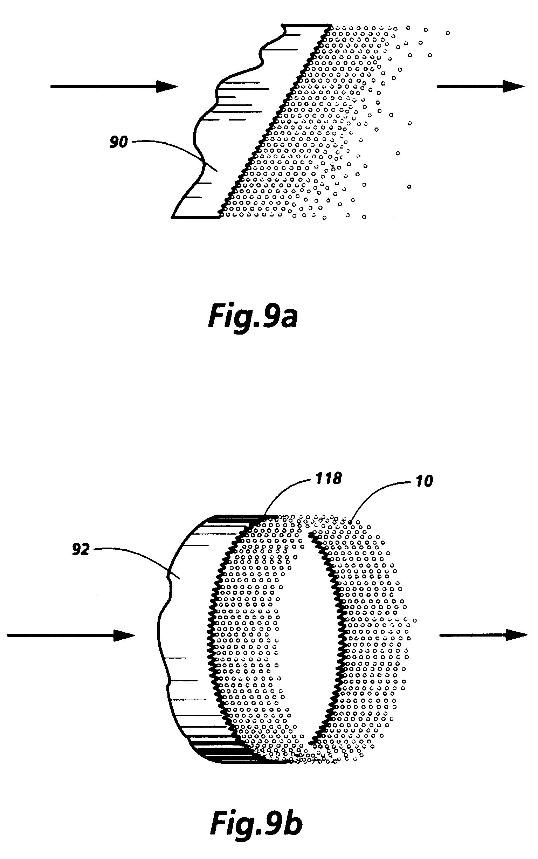

One dimensional, rod-like jets 40 of bichromal hardenable liquid material have been described. Sheet jets 90 and 92, as illustrated in Figure 9a and 9b, are also known. These are jets of fluid that are more two dimensional, issuing from slit-like orifices. Like the one dimensional rod-like jets, the sheet jets also are highly unstable so that their forward edge breaks up into droplets shortly after the sheets are created. Also, like the one dimensional jets, it is to be expected that the sheet jet droplets will form into highly uniformly sized spheres upon suitable excitation. Clearly, sheet jets will generate a much greater number of balls and provide a practical manufacturing system.

Planar sheet jets 90 have a strong tendency to contract at the lateral free edges, toward the center of the sheet, due to surface tension effects. This contraction causes a thickening of the jet at the sides which, upon breakup into droplets, results in larger ball diameters at the sides of the sheet. Cylindrical sheet jet 92, having no lateral free surfaces, will contract uniformly, resulting in uniform ball diameters.

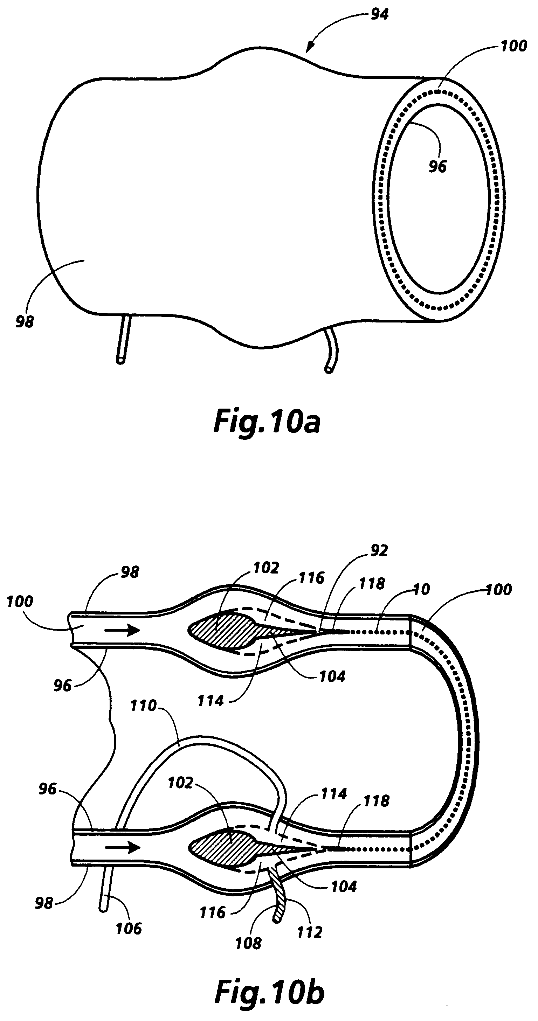

In Figures 10a and 10b there is illustrated a cylindrical sheet jet generator 94. It should be understood that curing, cooling and separating elements will be required in order to complete the fabrication apparatus. Generator 94 comprises an inner cylindrical member 96 and a concentric outer cylindrical member 98 defining an annular channel 100 through which the host liquid flows. The stream of host liquid is smoothly diverted into two cylindrical streams by an annular mandrel 102, within channel 100, and the two streams rejoin beyond the downstream tapered end 104 of the mandrel. Fine tubing 106 and 108 introduce different colored streams 110 and 112 of hardenable liquid into cavities 114 and 116 between the liquid streams and the tapered end 104 of the mandrel. The colored streams are emitted into the host liquid stream and form a bichromal cylindrical sheet jet 92 whose forward edge 118 breaks up into bichromal balls 10. Contraction of the bichromal cylindrical sheet jet is essentially eliminated by the host liquid trapped between it and the inner cylindrical member 96. The balls will be carried along the annular channel 100 and will be centered therein.

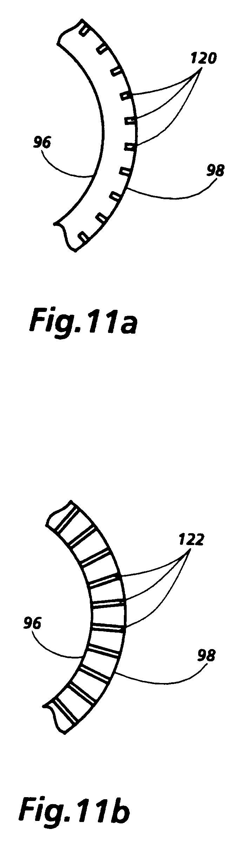

There appears to be no forces tending to maintain perimeter stability of the balls in the cylindrical flow. Therefore, they may drift into contact with one another and stick together. Should this be a problem. stabilizing ribs 120 may be placed within the annular channel 100, on one of the cylindrical members 96 or 98, as illustrated in Figure 11a, for creating hydrodynamic conditions that would adequately isolate the balls. If it is found that ribs 120 are insufficient to prevent lateral drifting of the balls, then the annular channel 100 could be fully divided into separate channels by walls 122, as illustrated in Figure 11b.

A practical cylindrical sheet jet generator 94 could have a sheet jet diameter of 25.4 cms (10 inches) and produce 1 mil diameter bichromal balls. A device of such construction could yield a ball generation rate of approximately 60 billion balls per hour which would be sufficient to fabricate about 200 display sheets per hour, each measuring 20.32 cm x 25.4 cm (8x10 inch).

It should be understood that numerous changes in details of construction and the combination and arrangement of elements and materials may be resorted to without departing from the scope of the invention as hereinafter claimed.

## Claims

1. A method of forming bichromal balls (10), characterised by
providing a laminar flow stream (36) of host liquid,
bringing together two streams (26,28) of differently colored hardenable liquids for forming a single bichromal stream (40),
introducing said single bichromal stream (40) substantially into the center of said stream (36) of host liquid,
transporting said bichromal stream (40) at substantially the same velocity as said stream (36) of host liquid, wherein the forward end of said bichromal stream (40) becomes unstable and breaks up into droplets which form into spherical balls (10) as they are moved by said host liquid,
curing said balls (10) so that they harden, and separating said balls (10) from said host liquid.

2. A method of forming bichromal balls as defined in claim 1, characterised in that said step of forming a single bichromal stream (40) produces either a rod-like stream or a sheet-like stream.

3. A method of forming bichromal balls as defined in claim 2, characterised in that said step of forming a sheet-like stream produces either a planar stream or a cylindrical stream.

4. A method of forming bichromal balls as defined in any one of claims 1 to 3, characterised in that said hardenable liquid comprises a two component epoxy resin and said step of curing comprises applying thermal energy to said epoxy resin and/or applying radiative energy to said epoxy resin.

5. Apparatus for forming bichromal balls (10), characterised by
means for defining a channel (38) through which a host liquid is moved,
means for moving said host liquid through said channel (38),
input means (34) for introducing two streams (26,28) of differently colored hardenable liquids into said moving host liquid as a single bichromal stream (40), whereby as said bichromal stream (40) is moved by said host liquid, the forward end of said bichromal stream (40) becomes unstable and breaks up into droplets which form into spherical balls (10) which are continued to be moved by said host liquid,
curing means (76) for curing said balls (10) so that they harden, and
separating means (86) for separating said balls (10) from said host liquid.

6. An apparatus for forming bichromal balls as defined in claim 5, characterised in that said input means for introducing comprises a nozzle (34) for bringing together said streams (26,28) of differently colored hardenable liquids and dispensing said streams as either a single rod-like bichromal stream (40) or as a single sheet-like bichromal stream.

7. An apparatus for forming bichromal balls as defined in claim 6, characterised in that said sheet-like bichromal stream (40) is planar or cylindrical.

8. An apparatus for forming bichromal balls as defined in claims 5, 6 or 7, characterised in that said host liquid is moved in a laminar flow stream (36) and said bichromal stream (40) is introduced substantially into the center of said laminar flow stream (36).

9. An apparatus for forming bichromal balls as defined in any one of claims 5 to 8, characterised in that said hardenable liquid is a thermosetting or photosetting material and said curing means for curing comprises a source of thermal energy or a source of actinic energy.

10. An apparatus for forming bichromal balls as defined in any one of claims 5 to 9, characterised in that said hardenable liquid comprises a two component epoxy resin.

11. An apparatus for forming bichromal balls as defined in any one of claims 5 to 10, characterised by recirculatory means for recirculating said host liquid after said balls (10) are separated therefrom.

## Patentansprüche

1. Verfahren zum Bilden zweifarbiger Kugeln (10), gekennzeichnet durch:
Schaffen eines Stroms (36) mit einer laminaren Strömung einer Grundflüssigkeit,
Zusammenbringen der zwei Ströme (26,28) unterschiedlich gefärbter, härtbarer Flüssigkeiten zum Bilden eines einzelnen, zweifarbigen Stroms (40),
Einführen des einzelnen, zweifarbigen Stroms (40) im wesentlichen in der Mitte des Stroms (36) der Grundflüssigkeit,
Transportieren des zweifarbigen Stroms (40) unter im wesentlichen derselben Geschwindigkeit wie der Strom (36) der Grundflüssigkeit, wobei das vordere Ende des zweifarbigen Stroms (40) instabil wird und in Tröpfchen aufbricht, die sich in sphärische Kugeln (10) formen, wenn sie durch die Grundflüssigkeit bewegt werden, Härten der Kugeln (10) so, daß sie sich verhärten, und
Separieren der Kugeln (10) aus der Grundflüssigkeit.

2. Verfahren zum Bilden einer zweifarbigen Kugel nach Anspruch 1, gekennzeichnet dadurch, daß der Schritt eines Bildens eines einzelnen, bichromatischen Stroms (40) entweder einen stabähnlichen Strom oder einen blattähnlichen Strom erzeugt.

3. Verfahren zum Bilden zweifarbiger Kugeln nach Anspruch 2, dadurch gekennzeichnet, daß der Schritt eines Bildens eines blattähnlichen Stroms entweder einen planaren Strom oder einen zylindrischen Strom erzeugt.

4. Verfahren zum Bilden zweifarbiger Kugeln nach einem der Ansprüche 1 bis 3, dadurch gekennzeichnet, daß die härtbare Flüssigkeit ein Zweikomponenten-Epoxdiharz aufweist und der Schritt eines Härtens das Aufbringen thermischer Energie auf das Epoxidharz und/oder das Aufbringen strahlungsmäßiger Energie auf das Epoxidharz aufweist.

5. Gerät zum Bilden zweifarbiger Kugeln (10), gekennnzeichnet durch
eine Einrichtung zum Definieren eines Kanals (38), durch den eine Grundflüssigkeit bewegt wird,
eine Einrichtung zum Bewegen der Grundflüssigkeit durch den Kanal (38),
eine Eingabeeinrichtung (34) zum Einführen von zwei Strömen (26,28) unterschiedlich gefärbter, härtbarer Flüssigkeiten in die sich bewegende Grundflüssigkeit als ein einzelner, zweifarbiger Strom (40), wodurch der zweifarbige Strom (40) durch die Grundflüssigkeit bewegt wird, wobei das vordere Ende des zweifarbigen Stroms (40) instabil wird und in Tröpfen aufbricht, die sich zu sphärischen Kugeln (10) formen, die fortfahrend durch die Grundflüssigkeit bewegt werden,
eine Härteinrichtung (76) zum Härten der Kugeln (10) so, daß sie aushärten, und
eine Separiereinrichtung (86) zum Separieren der Kugeln (10) aus der Grundflüssigkeit.

6. Gerät zum Bilden zweifarbiger Kugeln nach Anspruch 5, dadurch gekennzeichnet, daß die Eingabeeinrichtung zum Einführen eine Düse (34) aufweist, um die Ströme (26,28) der unterschiedlich gefärbten, härtbaren Flüssigkeiten zusammenzubringen und die Ströme als entweder einen einzelnen, stabförmigen, zweifarbigen Strom (40) oder als einen einzelnen, blattähnlichen, zweifarbigen Strom auszugeben.

7. Gerät zum Bilden zweifarbiger Kugeln nach Anspruch 6, dadurch gekennzeichnet, daß der blattähnliche, zweifarbige Strom (40) planar oder zylindrisch ist.

8. Gerät zum Bilden zweifarbiger Kugeln nach Anspruch 5, 6 oder 7, dadurch gekennzeichnet, daß die Grundflüssigkeit in einem Strom (36) mit laminarer Strömung bewegt wird und daß der zweifarbige Strom (40) im wesentlichen in der Mitte des Stroms (36) mit laminarer Strömung eingeführt wird.

9. Gerät zum Bilden zweifarbiger Kugeln nach einem der Ansprüche 5 bis 8, dadurch gekennzeichnet, daß die härtbare Flüssigkeit ein thermisch härtendes oder photohärtendes Material ist und die Härtungseinrichtung zum Härten eine Quelle einer thermischen Energie oder eine Quelle einer aktinischen Energie aufweist.

10. Gerät zum Bilden zweifarbiger Kugeln nach einem der Ansprüche 5 bis 9, dadurch gekennzeichnet, daß die härtbare Flüssigkeit ein Zweikomponenten-Epoxidharz aufweist.

11. Gerät zum Bilden zweifarbiger Kugeln nach einem der Ansprüche 5 bis 10, gekennzeichnet durch eine Rezirkulationseinrichtung zum Rezirkulieren der Grundflüssigkeit, nachdem die Kugeln (10) daraus separiert sind.

## Revendications

1. Procédé de formation de billes bicolores (10), caractérisé par les étapes consistant à :
procurer un flux à écoulement laminaire (36) de liquide hôte,
rassembler deux flux (26, 28) de liquides durcissables de couleurs différents afin de former un unique flux bicolore (40),
introduire ledit unique flux bicolore (40) sensiblement dans le centre dudit flux (36) de liquide hôte,
faire se déplacer ledit flux bicolore (40) à sensiblement la même vitesse que ledit flux (36) de liquide hôte, dans lequel l'extrémité antérieure dudit flux bicolore (40) devient instable et se brise en gouttelettes qui se forment en billes sphériques (10) tandis qu'elles sont déplacées par ledit liquide hôte,
traiter lesdites billes (10) de façon qu'elles durcissent, et
séparer lesdites billes (10) dudit liquide hôte.

2. Procédé de formation de billes bicolores selon la revendication 1, caractérisé en ce que ladite étape de formation d'un unique flux bicolore (40) produit soit un flux semblable à un barreau, soit un flux semblable à une lame.

3. Procédé de formation de billes bicolores selon la revendication 2, caractérisé en ce que ladite étape de formation d'un flux semblable à une lame produit soit un flux planaire, soit un flux cylindrique.

4. Procédé de formation de billes bicolores selon l'une quelconque des revendications 1 à 3, caractérisé en ce que ledit liquide durcissable comprend une résine époxy à deux composants et ladite étape de traitement comprend l'application d'une énergie thermique à ladite résine époxy et/ou l'application d'une énergie de rayonnement à ladite résine époxy.

5. Dispositif pour former des billes bicolores (10), caractérisé par
des moyens définissant un canal (38) au travers duquel on fait se déplacer un liquide hôte,
des moyens pour faire se déplacer ledit liquide hôte au travers dudit canal (38),
des moyens d'admission (34) permettant d'introduire deux flux (26, 28) de liquides durcissables de couleurs différentes dans ledit liquide hôte en déplacement sous forme d'un unique flux bicolore (40), où lorsque ledit flux bicolore (40) est déplacé par ledit liquide hôte, l'extrémité antérieure dudit flux bicolore (40) devient instable et se brise en gouttelettes qui se forment en billes sphériques (10) qui continuent d'être déplacées par ledit liquide hôte,
des moyens de traitement (76) pour traiter lesdites billes (10) de façon qu'elles durcissent, et
des moyens de séparation (86) pour séparer lesdites billes (10) dudit liquide hôte.

6. Dispositif pour former des billes bicolores selon la revendication 5, caractérisé en ce que lesdits moyens d'admission permettant d'introduire comprennent une buse (34) destinée à rassembler lesdits flux (26, 28) de liquides durcissables de couleurs différentes et à délivrer lesdits flux soit sous forme d'un unique flux bicolore semblable à un barreau (40), soit sous forme d'un unique flux bicolore semblable à une lame.

7. Dispositif pour former des billes bicolores selon la revendication 6, caractérisé en ce que ledit flux bicolore semblable à une lame (40) est planaire ou cylindrique.

8. Dispositif pour former des billes bicolores selon les revendications 5, 6 ou 7, caractérisé en ce que ledit liquide hôte est déplacé en un flux à écoulement laminaire (36) et ledit flux bicolore (40) est introduit sensiblement dans le centre dudit flux à écoulement laminaire (36).

9. Dispositif pour former des billes bicolores selon l'une quelconque des revendications 5 à 8, caractérisé en ce que ledit liquide durcissable est un matériau thermodurcissable ou photodurcissable et lesdits moyens de traitement destinés à traiter comprennent une source d'énergie thermique ou une source d'énergie actinique.

10. Dispositif pour former des billes bicolores selon l'une quelconque des revendications 5 à 9, caractérisé en ce que ledit liquide durcissable comprend une résine époxy à deux composants.

11. Dispositif pour former des billes bicolores selon l'une quelconque des revendications 5 à 10, caractérisé par des moyens de recirculation destinés à faire recirculer ledit liquide hôte après que lesdites billes (10) ont été séparées de celui-ci.
